# EUROPEAN PATENT SPECIFICATION

(11) **EP 4 007 064 B1**
(45) Date of publication and mention of the grant of the patent: **13.05.2026**
(21) Application number: 20843527.1
(22) Date of filing: 24.06.2020
(51) Int. Cl.: H01Q 1/32, H01Q 1/12, H01Q 15/14, H01Q 21/28

(54) **UPPER STRUCTURE FOR VEHICLE**
OBERE STRUKTUR FÜR EIN FAHRZEUG
STRUCTURE SUPÉRIEURE POUR VÉHICULE

(30) Priority: 22.07.2019 JP 2019134569
(43) Date of publication of application: 01.06.2022
(73) Proprietor: MAZDA MOTOR CORPORATION, Hiroshima 730-8670 (JP)
(72) Inventor: TANIOKA, Yasuhito, Aki-gun, Hiroshima 730-8670 (JP); SHIGETA, Kazuo, Aki-gun, Hiroshima 730-8670 (JP); HIRASA, Yoshiaki, Aki-gun, Hiroshima 730-8670 (JP); SHIMURA, Toshiyuki, Aki-gun, Hiroshima 730-8670 (JP); NUMOTO, Masaki, Aki-gun, Hiroshima 730-8670 (JP); MIYAKE, Koichi, Aki-gun, Hiroshima 730-8670 (JP)
(74) Representative: Müller-Boré & Partner Patentanwälte PartG mbB
(86) International application number: PCT/JP2020/024688
(87) International publication number: WO 2021/014866

(56) References cited:
- EP-A1- 0 262 755
- WO-A1-2019/150686
- JP-A- 2008 022 430
- JP-A- 2013 542 657
- JP-A- 2018 125 767
- JP-A- 2018 133 792
- JP-A- H07 273 526
- US-A1- 2017 229 767
- US-A1- 2019 157 743
- ANONYMOUS: "What is an antenna that enhances the spiritual design? ~ The thoughts of engineers involved in the development of shark fin antennas", ZOOM-ZOOM BLOG, 6 January 2016 (2016-01-06), pages 1 - 11, XP055786082, Retrieved from the Internet <URL:https://blog.mazda.com/archive/20160107_01.html> [retrieved on 20200821]

## Description

### Technical Field

The present invention relates to an upper structure for a vehicle such as an automobile and, in particular, to an upper structure of a vehicle including an antenna device on a roof of the vehicle.

### Background Art

Conventionally, a vehicle such as an automobile is equipped with an antenna device on a roof. An antenna for one or plural in-vehicle communication devices is installed in the antenna device. In recent years, many vehicles include a shark-fin type antenna device, for example, as disclosed in Patent Literature 1 in a rear end portion of the roof for design quality.

Conventionally, the antenna is targeted for transmission and/or reception of a radio wave toward sky above the vehicle. However, in recent years, due to development in V2X communication represented by Vehicle-to-Vehicle (V2V) communication and Vehicle-to-Roadside-Infrastructure (V2I) communication, in the case where a V2X communication antenna is installed in the antenna device, it is requested to appropriately transmit and/or receive the radio wave also in a direction along the roof. For this reason, for example, the following problem is inherent to a vehicle in which a rear window spoiler (also referred to as a rear window deflector) made of a resin is mounted on a rear gate and a type of a vehicle in which a roof rail made of the resin, or the like is mounted on a roof.

In these vehicles, the antenna device, the rear window spoiler and the like are arranged in vicinity of each other along the roof. The rear window spoiler made of the resin, or the like can transmit the radio wave. However, it is actually difficult to completely transmit the radio wave, and there is a case where the radio wave that is directed to an upper surface of the rear window spoiler or the like is incident on inside of the rear window spoiler or the like, is irregularly reflected on the inside, and induces radio wave interference. As a result, such radio wave interference causes degradation of radio wave transceiving performance, which produces a case that cannot be ignored in securing accuracy of the V2X communication.

### Citation List

### Patent Literature

Patent Literature 1: JP-A-2018-152824

US 2017/229767 A1 describes an aerodynamic device for a vehicle, comprising one or more antenna elements arranged to extend from a surface of the aerodynamic device.

### Summary of Invention

The present invention has been made in view of the above circumstance and therefore has a purpose of providing a technique capable of improving radio wave transceiving performance by an antenna device in a vehicle including the antenna device on a roof.

The present invention is an upper structure for a vehicle as defined in claim 1.

### Brief Description of Drawings

[Fig. 1] Fig. 1 is a perspective view of a rear portion of a vehicle (an automobile) to which an upper structure of the vehicle according to a first embodiment of the present invention is applied.
[Fig. 2] Fig. 2 is a side view of the rear portion of the vehicle.
[Fig. 3] Fig. 3 is a plan view of the rear portion of the vehicle.
[Fig. 4] Fig. 4 is a cross-sectional view of the rear portion of the vehicle (a cross-sectional view that is taken along line IV-IV in Fig. 3).
[Fig. 5] Fig. 5 is a characteristic diagram illustrating a reception intensity characteristic by an antenna device of the vehicle.
[Fig. 6] Fig. 6 is a characteristic diagram illustrating a reception intensity characteristic by an antenna device of a vehicle according to a comparative example.
[Fig. 7] Fig. 7 is a plan view of a rear portion of a vehicle according to a second embodiment.
[Fig. 8] Fig. 8 is a cross-sectional view of the rear portion of the vehicle (a cross-sectional view that is taken along line VIII-VIII in Fig. 7).
[Fig. 9] Fig. 9 is a cross-sectional view of a rear portion of a vehicle according to a modified embodiment forming part of the claimed invention.

### Description of Embodiments

A detailed description will hereinafter be made on an embodiment of the present invention with reference to the drawings.

### [First Embodiment]

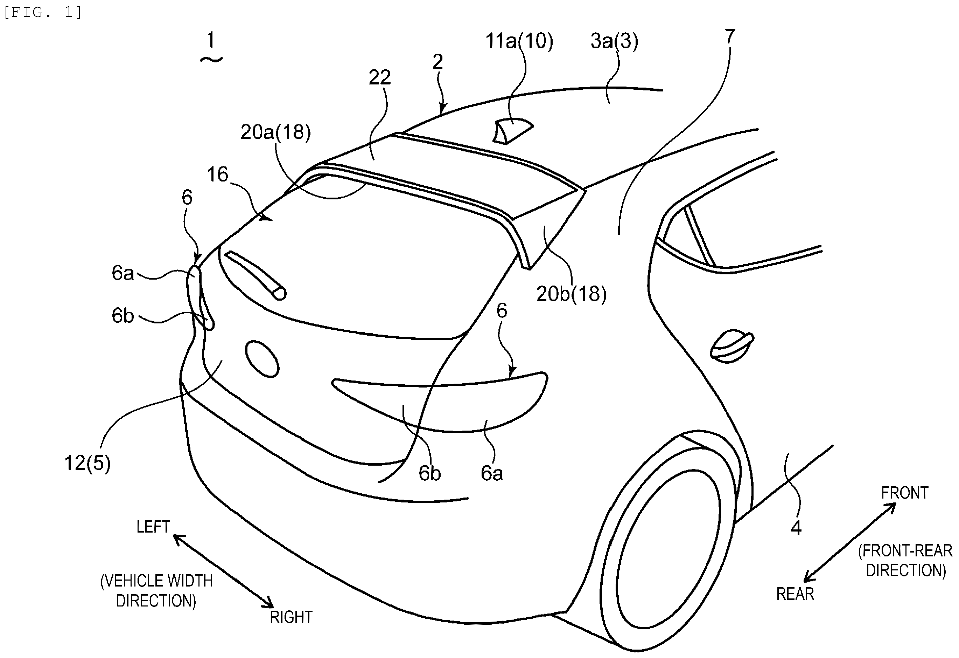

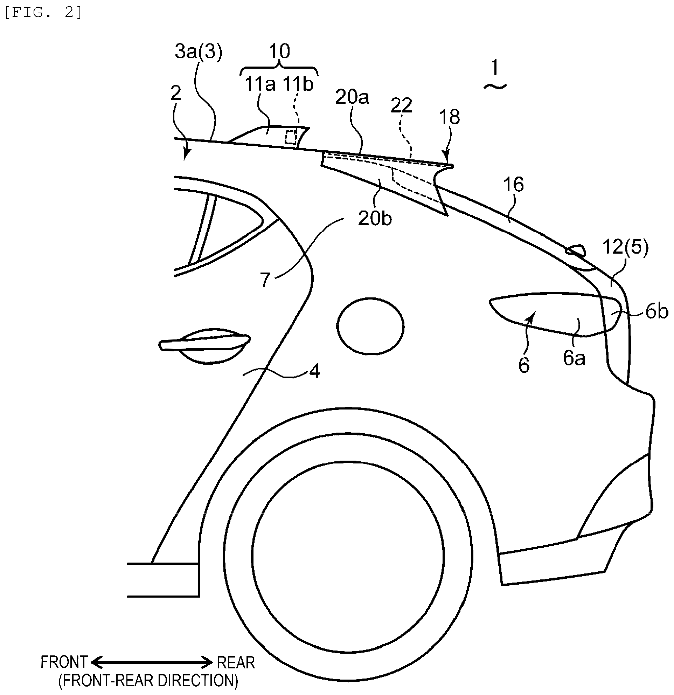

Fig. 1 is a perspective view of a rear portion of a vehicle to which an upper structure of the vehicle according to the present invention is applied, and Fig. 2 is a side view of the rear portion of the vehicle.

A vehicle 1 illustrated in Fig. 1 and Fig. 2 is a five-door hatchback-type automobile including: a vehicle body 2 that includes a roof 3 for covering an upper portion of a cabin space; a front door (not illustrated) that is openably/closably supported by this vehicle body 2 via unillustrated hinges; and a rear door 34 and a lift gate 45.

A right and left pair of rear combination lamps 6 are provided in a rear portion of the vehicle 1. The rear combination lamp 6 functions as a stop lamp and a turn signal lamp. In this embodiment, the rear combination lamp 6 has a split structure having: an outer lamp 6a assembled to the vehicle body 2; and an inner lamp 6b assembled to the lift gate 4.

An in-vehicle wireless communication device including an ECU (not illustrated) and an antenna device 10 (corresponding to the "first antenna device" in the present invention) is mounted on the vehicle 1, and the antenna device 10 is arranged on an upper surface of the roof 3. This in-vehicle wireless communication device has a function of performing Vehicle-to-Vehicle communication and Vehicle-to-Roadside-Infrastructure communication. In the following description, these types of the Vehicle-to-Vehicle communication and the Vehicle-to-Roadside-Infrastructure communication will collectively be referred to as V2X communication.

The antenna device 10 is arranged on the upper surface of the roof 3. More specifically, the antenna device 10 is arranged in an area located in a rear end portion and a central portion in a vehicle width direction of an upper surface of a metallic roof panel 3a that is formed of a thin steel plate or the like.

The antenna device 10 is a shark-fin type roof antenna and includes: a casing 11a that is made of a resin and is fixed to the upper surface of the roof 3; and an antenna 11b for exchanging a radio wave of the V2X communication, the antenna 11b being accommodated in the casing 11a.

A frequency band of the radio wave of the V2X communication is a 5.8 GHz band to 5.9 GHz band (5.850 GHz to 5.925 GHz) in this example, and thus, the antenna 11b has an electrical length capable of exchanging the radio wave of this 5.8 GHz band to 5.9 GHz band. A 700 MHz band can also be used as the frequency band of the radio wave of the V2X communication.

The lift gate 5 is arranged behind the roof 3. The lift gate 5 includes: a metallic gate body 12; and a rear window 16, a rear window spoiler 18 (corresponding to the "resin member" in the present invention), and a reflective plate 22 (corresponding to the "metal member" in the present invention), each of which is incorporated in this gate body 12.

A front end portion (an upper end portion) of the gate body 12 is coupled to an unillustrated hinge that is provided in a rear end portion of the roof 3. With this configuration, the lift gate 5 is supported in a vertically swingable manner by the vehicle body 2 with a front end portion (the hinge) thereof as a fulcrum. Swinging of this lift gate 5 opens/closes an opening that is provided in a rear portion of the vehicle body 2.

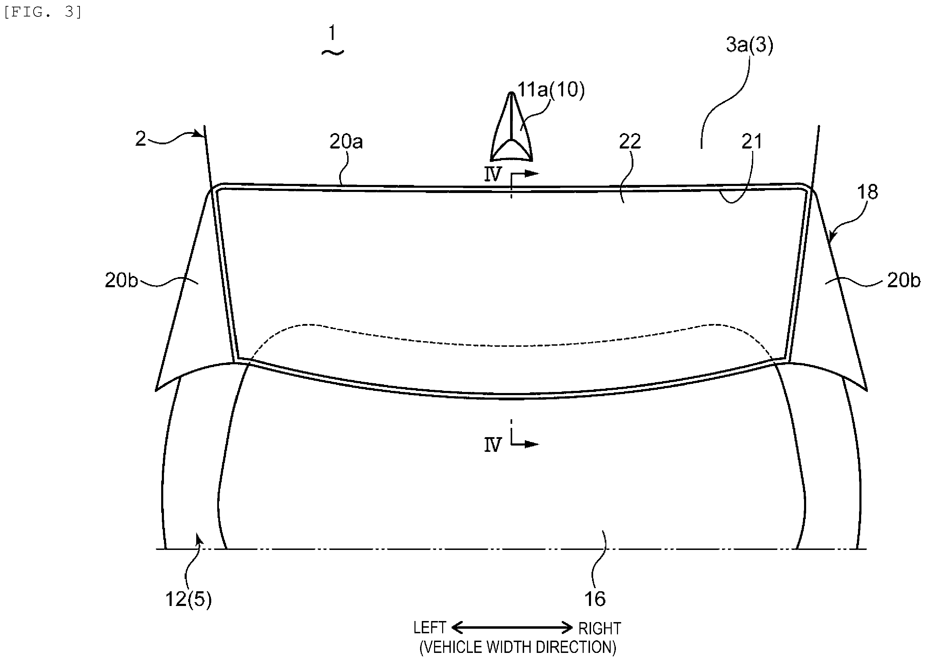

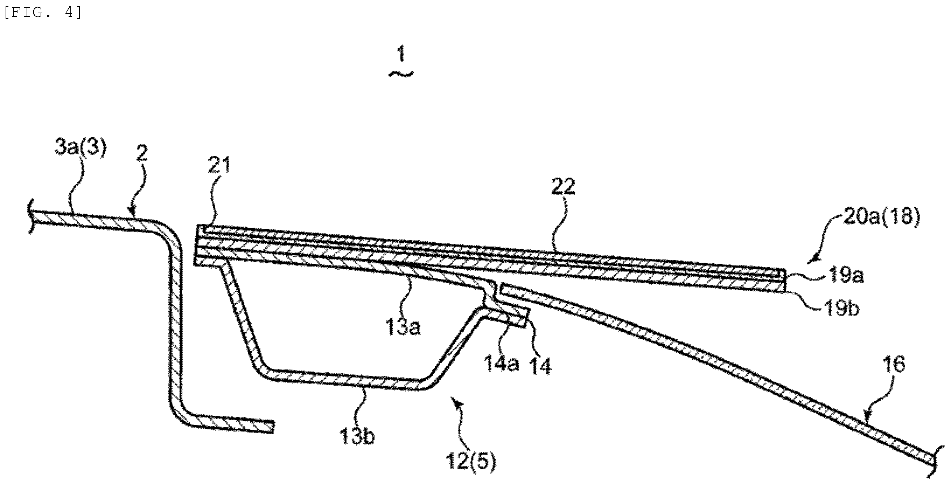

Fig. 3 is a plan view of a rear portion of the vehicle 1, and Fig. 4 is a cross-sectional view of the rear portion of the vehicle 1 (a cross-sectional view that is taken along line IV-IV in Fig. 3). As illustrated in these Fig. 3 and Fig. 4, the gate body 12 is constructed by joining an outer panel 13a and an inner panel 13b, each of which is formed of a thin steel plate or the like, to each other.

A window opening 14 is provided at a position near the front end portion (the upper end portion) of the gate body 12, and the rear window 16 is assembled to this window opening 14. More specifically, a flange section 14a is formed around an entire inner edge of the window opening 14. The rear window 16 is superimposed on this flange section 14a via an unillustrated seal member, and the seal member and each of the flange section 14a and the rear window 16 are bonded to each other by an adhesive.

The rear window spoiler 18 is arranged above the front end portion of the gate body 12. The rear window spoiler 18 has an outer panel 19a (corresponding to the "upper resin layer" in the present invention) and an inner panel 19b (corresponding to the "lower resin layer" in the present invention), each of which is formed of a resin material such as a polycarbonate resin or ABS, and is constructed by integrally joining these. The rear window spoiler 18 (the outer panel 19a and the inner panel 19b) may be formed of a fiber-reinforced resin containing a glass fiber or a carbon fiber.

The rear window spoiler 18 has: a center section 20a that has a rectangular shape in plan view and extends in the vehicle width direction; and paired side sections 20b, each of which has a triangular shape in plan view, and which respectively continue to right and left ends of this center section 20a. A width of the rear window spoiler 18 (a width in the vehicle width direction) is slightly greater than a width of the front end portion of the gate body 12. Accordingly, as illustrated in Fig. 1 to Fig. 3, each of the side sections 20b is partially located on an outer side of the gate body 12 in the vehicle width direction.

The center section 20a is fastened to the front end portion of the gate body 12 by an unillustrated fastening member such as a bolt-nut. In this way, the rear window spoiler 18 is fixed to the lift gate 5 and can be displaced with the lift gate 5.

A width of the center section 20a in the vehicle width direction is set to be equal to or slightly larger than a width in the same direction of a front end portion of the rear window 16. A front end of the center section 20a is located at the substantially same position as a front end of the gate body 12, and a rear end of the center section 20a is located above an area in the front end portion of the rear window 16. In other words, the rear window spoiler 18 (the center section 20a) covers a portion of the rear window 16 (an area of a part of the front end portion) from above.

The side section 20b hangs down from each of right and left ends of the center section 20a toward a C-pillar 7 of the vehicle body 2. In a closed state of the lift gate 5, a clearance is provided between a tip (a lower end) of each of the side sections 20b and the C-pillar 7, and thus the side section 20b is provided in a non-contact manner to the vehicle body 2 (the C-pillar 7).

The reflective plate 22 forms a metal layer for reflecting the radio wave of the V2X communication on the rear window spoiler 18, and is attached in a laminated state to an upper surface of the rear window spoiler 18. More specifically, the reflective plate 22 is a thin metallic plate that is made of iron, aluminum, copper, or the like. The reflective plate 22 has a similar shape to the center section 20a, and the shape is slightly smaller than the center section 20a of the rear window spoiler 18 in plan view. In addition, a recess 21 having the same contour as the reflective plate 22 is formed on an upper surface of the center section 20a (the outer panel 19a). In a state where the reflective plate 22 is fitted into this recess 21, the reflective plate 22 and the center section 20a are fixed to each other by an adhesive. The reflective plate 22 and the center section 20a may be fixed by a fastening member such as a bolt-nut.

The upper surface of the center section 20a and an upper surface of the reflective plate 22 are substantially flush. As illustrated in Fig. 4, the upper surface of the reflective plate 22 is provided to be located in an imaginary plane formed by extending the upper surface of the roof 3a to the rear of the vehicle, for example.

### [Operational Effects]

The vehicle 1 (the upper structure of the vehicle 1) that has been described so far includes: the roof 3 that covers the upper portion of the cabin space; the antenna device 10 that includes the casing 11a disposed on the upper surface of the roof 3 and the antenna 11b accommodated in the casing 11a and exchanging the radio wave; the rear window spoiler 18 that is arranged adjacent to this antenna device 10; and the reflective plate 22 that is attached to the rear window spoiler 18 and is formed with the metal layer.

According to this vehicle 1, since the radio wave that is directed to the upper surface of the rear window spoiler 18 is reflected (positively reflected) by the reflective plate 22 (the metal layer), the incident of the radio wave on the rear window spoiler 18 is suppressed. Thus, occurrence of radio wave interference caused by irregular reflection of the radio wave in the rear window spoiler 18 is effectively suppressed.

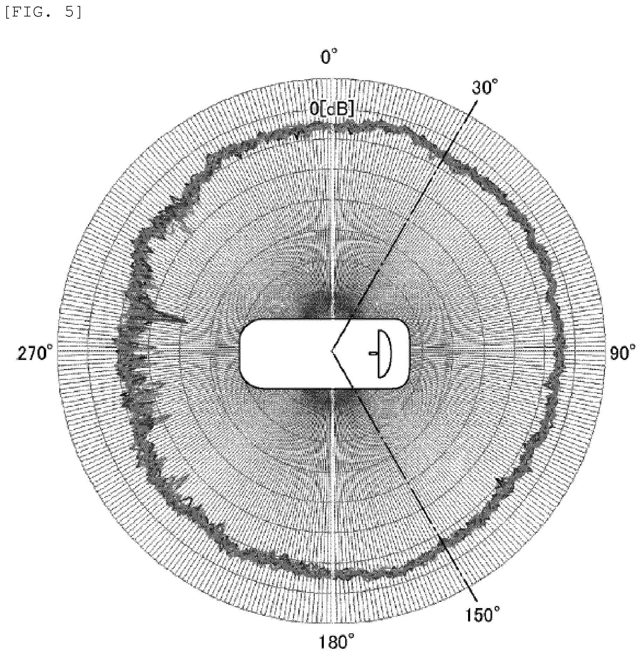

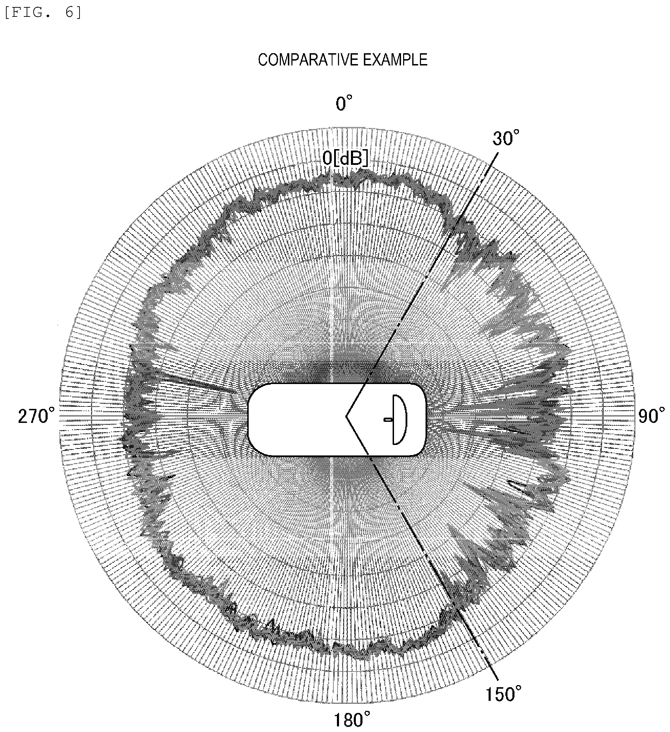

Fig. 5 is a characteristic diagram illustrating a reception intensity characteristic of the radio wave by the antenna device 10 of the vehicle 1 in the embodiment. Fig. 6 is a characteristic diagram illustrating a reception intensity characteristic by the antenna device 10 of a vehicle according to a comparative example, that is, a vehicle whose structure differs from that of the vehicle 1 in the above embodiment only in a point that the reflective plate (22) is not provided. Each of the drawings indicates that the reception intensity is weakened toward a center.

As illustrated in these characteristic diagrams, in the vehicle according to the comparative example, the reception intensity varies significantly mainly behind the vehicle 1, in particular, within a range in a direction from 30° to 150°. Meanwhile, in the vehicle 1 of the above embodiment, the reception intensity does not vary significantly within the same range (30° to 150°), and the substantially constant reception intensity is maintained. In addition, comparing the reception intensity in the above range (30° to 150°), the reception intensity of the vehicle according to the comparative example is relatively weaker than the reception intensity of the vehicle 1 in the embodiment.

It is assumed that, while, in the vehicle according to the comparative example, the radio wave that is directed to the upper surface of the rear window spoiler 18 is incident on the inside thereof and a part of the radio wave is irregularly reflected to cause the radio wave interference, in the vehicle 1 according to the embodiment, occurrence of such radio wave interference is suppressed. It is assumed that, in the vehicle according to the comparative example, the reception intensity in the above range (30° to 150°) is relatively weaker than the reception intensity of the vehicle 1 in the embodiment and this is because an effect of weakening the reception intensity by the radio wave interference is prominently exhibited.

As described above, with the structure of the vehicle 1 in the embodiment including the reflective plate 22, it is possible to effectively suppress the occurrence of the radio wave interference by the rear window spoiler 18. Accordingly, with the structure of the vehicle 1, compared to the vehicle not including the reflective plate 22 (the vehicle according to the comparative example), it is possible to improve transceiving performance of the radio wave by the antenna device 10 and thereby improve communication accuracy in the V2X communication.

In particular, with the structure of the above embodiment, the reflective plate 22 is the thin metal plate, is fitted into the recess 21 formed in the rear window spoiler 18 (the outer panel 19a), and is fixed thereto by the adhesive. Thus, there is also an advantage that the operational effect as described above can be enjoyed with the extremely simple and inexpensive structure.

### [Second Embodiment]

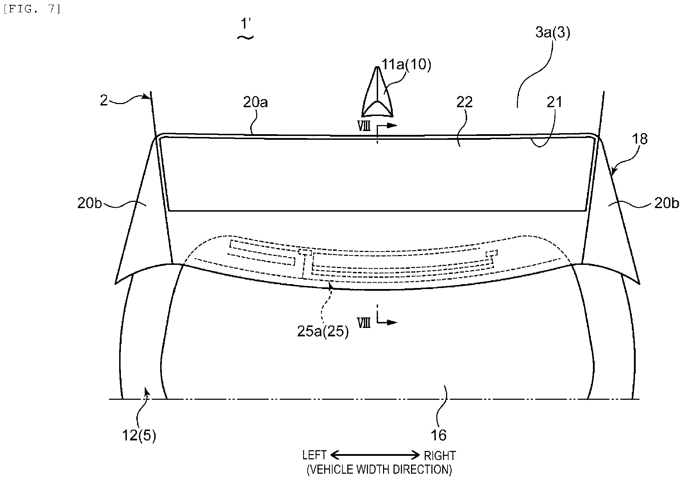

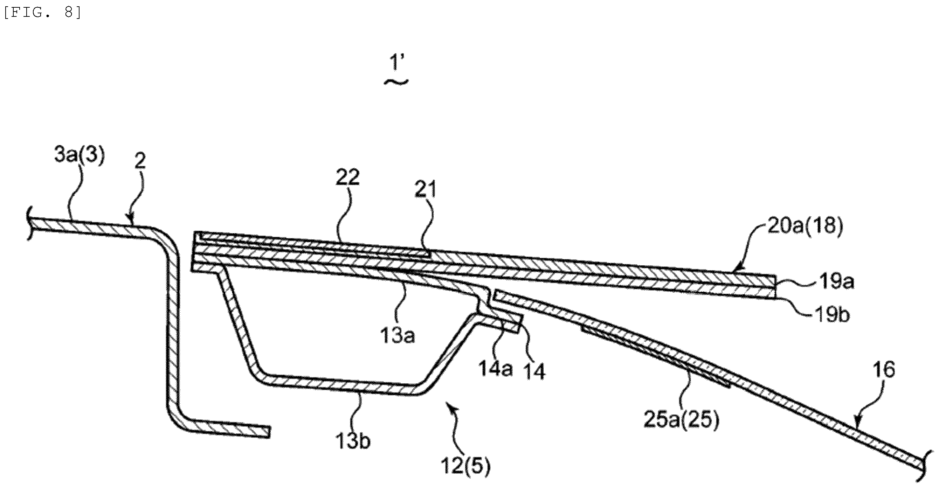

Fig. 7 is a plan view of a rear portion of a vehicle 1' to which an upper structure of a vehicle according to a second embodiment of the present invention, and Fig. 8 is a cross-sectional view of the rear portion of the vehicle 1'.

The vehicle 1' according to the second embodiment includes an antenna device 25 (corresponding to the second antenna device in the present invention) for radio (AM/FM) reception in an area of an upper end portion of the rear window 16, that is, an area that is covered with the rear window spoiler 18 from above (corresponding to the "partial area" in the present invention). The antenna device 25 includes a glass antenna 25a (referred to as an antenna 25a) that is printed on or affixed to a surface on the cabin side of the rear window 16 or is embedded in the rear window 16. This antenna 25a is provided over a width direction (the vehicle width direction) of the area of the upper end portion of the rear window 16.

In such a vehicle 1', in the case where the reflective plate 22 is provided over a substantially whole surface of the center section 20a of the rear window spoiler 18 as in the first embodiment, the reception of the radio wave by the antenna device 25 is possibly interfered. Accordingly, in the vehicle 1' of the second embodiment, as illustrated in Fig. 7 and Fig. 8, in the center section 20a, the reflective plate 22 is only provided at a position that does not overlap the antenna 25a in the vehicle plan view, more specifically, in a front-half area of the center section 20a.

A structure of fixing the reflective plate 22 to the rear window spoiler 18 is the same as to that in the first embodiment. That is, the reflective plate 22 is fitted into this recess 21 that is formed in the upper surface of the center section 20a (the outer panel 19a), and the reflective plate 22 and the center section 20a are fixed to each other by the adhesive.

According to such a vehicle 1' in the second embodiment (the upper structure of the vehicle 1), since the reflective plate 22 is provided at a position that does not overlap with the antenna 25a of the antenna device 25 for radio (AM/FM) reception, it is possible to improve the transceiving performance of the radio wave by the antenna device 10 for the V2X communication without interfering with the reception of the radio wave.

Here, the description has been made on the example in which the antenna device 25 for the radio (AM/FM) reception (corresponding to the "second antenna device" in the present invention) is provided to the rear window 16. However, a similar structure can also be adopted for a case where an antenna device for TV reception or an antenna device for a mobile phone is provided to the rear window 16. With this structure, it is possible to improve the tranceiving performance of the radio wave by the antenna device 10 for the V2X communication without interfering with reception of a TV radio wave or transmission and reception of a radio wave of the mobile phone.

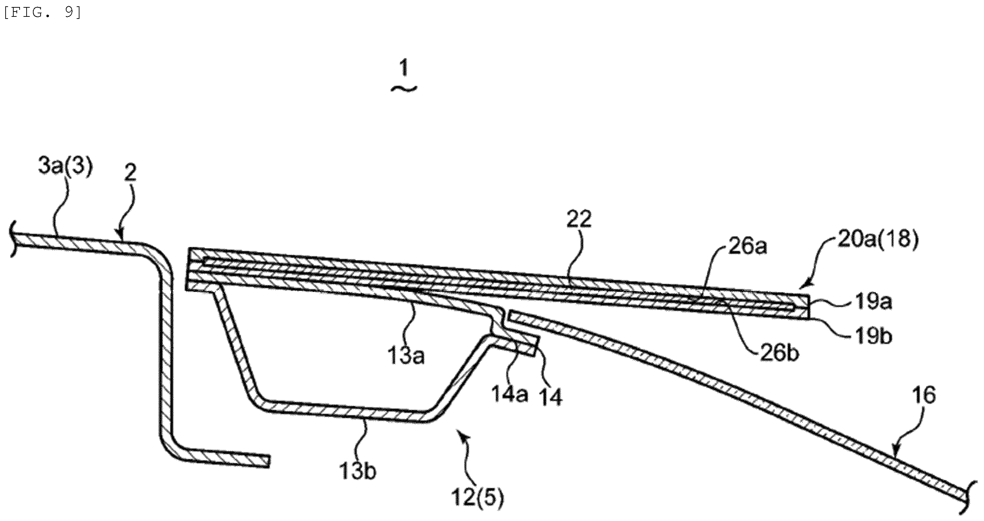

(1) In the vehicle 1 of each of the above embodiments, the reflective plate 22 is provided to be superimposed on the upper surface of the rear window spoiler 18 (the center section 20a). However according to the claimed invention, as illustrated in Fig. 9, the reflective plate 22 is provided in a laminated state between the outer panel 19a and the inner panel 19b of the rear window spoiler 18 (the center section 20a). More specifically, recesses 26a, 26b are respectively formed on surfaces opposing the outer panel 19a and the inner panel 19b, and the reflective plate 22 is interposed between both of the panels 19a, 19b in a state of being fitted into each of these recesses 26a, 26b.

In this structure, while being incident on the upper outer panel 19a, the radio wave is not incident on the lower inner panel 19b and is reflected (positively reflected) by the reflective plate 22. Thus, compared to a case where the reflective plate 22 is not provided, the occurrence of the radio wave interference is suppressed. Therefore, it can be said that the case with such a structure can also improve the transceiving performance of the radio wave by the antenna device 10.

(2) In each of the above embodiments, as the example of the "metal member" in the present invention, the thin plate (the reflective plate 22), which is made of metal such as iron, aluminum, or copper, is attached to the rear window spoiler 18. However, the present invention is not limited to this structure. That is, the "metal member" in the present invention only needs to be the metal member that is attached to the rear window spoiler 18 (the resin member) to form the metal layer. Accordingly, the "metal member" may be provided on the upper surface of the rear window spoiler 18 (that is, at least the upper surface of the outer panel 19a) or to the inside of the rear window spoiler 18 (that is, at least the upper surface of the inner panel 19b), for example, by a surface treatment layer of the metal, that is, painting, wet plating, dry plating (evaporation), or the like.

With this structure, compared to the structure in which the "metal member" is formed as the thin metal plate, it is possible to thin and reduce weight of the "metal member (the metal layer)". In addition, it is possible to improve the transceiving performance of the radio wave by the antenna device 10 while achieving high integration of the "metal member" and the rear window spoiler.

(3) In each of the above embodiments, the reflective plate 22 is provided only on the center section 20a of the rear window spoiler 18. However, similarly, the reflective plate 22 may be provided on the side section 20b.

(4) In addition to the function for the V2X communication, the in-vehicle wireless communication device may have a function of receiving the radio wave from a navigation satellite of the Global Navigation Satellite System (GNSS) or a function for mobile phone communication. In this case, in addition to the antenna 11b for exchanging the radio wave for the V2X communication, the antenna device 10 includes a GNSS antenna for receiving the radio wave from the navigation satellite or an antenna for exchanging the radio wave for the mobile phone communication.

(5) In each of the above embodiments, the present invention is applied to the vehicle 1 that includes the rear window spoiler 18 (the resin member) behind the antenna device 10. However, the present invention can also be applied to other vehicles. For example, the present invention can also be applied to a case where a resin roof rail is provided on the roof. In this case, it can be expected to enjoy the same effects as those exerted by the structure in the above embodiment by providing the metal member that is formed as the thin metal plate or the like in the laminated state to the roof rail.

The present invention described above will be summarized as follows.

The upper structure of the vehicle according to an aspect of the present invention includes: the roof that covers the upper portion of the cabin space; the antenna device that includes the casing disposed on the upper surface of the roof and the antenna accommodated in the casing and exchanging the radio wave; the resin member that is arranged adjacent to the antenna device; and the metal member that is attached to the resin member and forms the metal layer. The antenna transmits and/or receives the radio wave that is directed to the upper surface of the roof and the upper surface of the resin member. The metal member is arranged to reflect the radio wave that is directed to the upper surface of the resin member.

Here, "attached" described in "the metal member that is attached to the resin member and forms the metal layer" means, in addition to mechanical attachment using the bolt-nut or the like, adhesion, painting, plating, and the like.

According to this upper structure of the vehicle, the radio wave that is directed to the upper surface of the resin member is reflected (positively reflected) by the metal member. Thus, it is possible to suppress the irregular reflection of the radio wave, which is directed to the upper surface of the resin member, in the resin member to cause the radio wave interference. As a result, it is possible to improve the transceiving performance of the radio wave by the antenna device.

In the above structure, the metal member is preferably attached to the upper surface of the resin member.

With this structure, since the metal layer is formed on the upper surface of the resin member by the metal member, it is possible to suppress the incident of the radio wave, which is directed to the upper surface of the resin member, on the inside of the resin member. Therefore, it is possible to suppress the occurrence of the radio wave interference, which is caused by the irregular reflection of the radio wave in the resin member, to a higher degree.

In this case, the metal member is preferably the metal plate that is attached to the upper surface of the resin member.

With this structure, it is possible to enjoy the effects as described above with the simple and inexpensive structure in which the metal plate is attached to the upper surface of the resin member.

In the upper structure of the vehicle in each of the above aspects, the antenna device is disposed in the area on the vehicle rear side of the upper surface of the roof.

In recent years, the shark-fin type antenna device is frequently provided in the area on the vehicle rear side of the upper surface of the roof. There is a case where various resin members are arranged in the area on the vehicle rear side. Thus, in the case where the antenna device is arranged in the area on the vehicle rear side of the upper surface of the roof, the transceiving performance thereof is easily affected by the resin members. Thus, it can be said that the upper structure of the vehicle in each of the above aspects is useful in the case where the antenna device is disposed in the area on the vehicle rear side of the upper surface of the roof.

In the upper structure of the vehicle in each of the above aspects, the resin member is disposed in the area on the vehicle rear side of the antenna device.

In such a structure, it is considered that, for example, in regard to the Vehicle-to-Vehicle communication with the car behind, the trasceiving performance of the antenna device is easily affected by the resin member. Thus, it can be said that the upper structure of the vehicle in each of the above aspects is useful in the case where the resin member is disposed in the area on the vehicle rear side of the antenna device.

The resin member includes the upper resin layer and the lower resin layer. The metal member is interposed between the upper resin layer and the lower resin layer.

In this structure, while the radio wave that is directed to the upper surface of the resin member can be incident on the upper resin layer, such a radio wave is not incident on the lower resin layer and is reflected (positively reflected) by the metal member (the metal layer). Accordingly, compared to the case where the metal member is not provided, the occurrence of the radio wave interference, which is caused by the irregular reflection of the radio wave in the resin member, is suppressed. Therefore, also in the case with the structure, it is possible to improve the transceiving performance of the radio wave by the antenna device.

The metal member may be the surface treatment layer of the metal.

With this structure, it is possible to thin and reduce the weight of the metal member (the metal layer) and to improve the transceiving performance of the radio wave by the antenna device while achieving the high integration of the metal member and the resin member.

In the upper structure of the vehicle in each of the above aspects, the radio wave is the radio wave in the frequency band used in the V2X communication.

In the V2X communication, it is required to properly transmit and/or receive the radio wave in a direction along the roof panel and in a slightly downward direction thereof for the Vehicle-to-Vehicle communication and the Vehicle-to-Roadside-Infrastructure communication. Accordingly, in the case where the resin member is arranged adjacent to the antenna device, reliability of the transmission and/or reception of the radio wave, which is directed to the upper surface of the resin member, affects communication accuracy of the V2X communication. Thus, it can be said that the upper structure of the vehicle in each of the above aspects is particularly useful in the case where the radio wave is the radio wave in the frequency band (the 700 MHz band, the 5.8 GHz band, or the 5.9 GHz band) used in the V2X communication.

In the upper structure of the vehicle in each of the above aspects, in the case where the antenna device is defined as the first antenna device and where the rear window, which is arranged behind the roof and the partial area of which is located below the resin member, and the second antenna device, which includes the antenna provided in the partial area of the rear window, are further provided, the metal member is preferably attached to the position on the resin member that does not overlap the antenna of the second antenna device in vehicle plan view.

With this structure, it is possible to improve the transceiving performance of the radio wave by the first antenna device without interfering with the transmission and/or reception of the radio wave by the second antenna device provided to the rear window.

In the upper structure of the vehicle in each of the above aspects, the resin member is the rear window spoiler.

For example, in a hatchback-type vehicle having a rear gate, the rear window spoiler is provided to a front end portion (an upper end portion) of the rear gate from perspectives of improved travel performance, design quality, and the like. The rear window spoiler has a relatively large area. Thus, in the case where the antenna device and the rear window spoiler, which is made of the resin, are arranged adjacent to each other, the transceiving performance of the radio wave by the antenna device is possibly degraded due to an influence of the rear window spoiler (an influence of the radio wave interference described above). Therefore, the upper structure of the vehicle in each of the above-described aspects is particularly useful as the upper structure of the vehicle that includes the rear window spoiler as the resin member.

## Claims

1. An upper structure for a vehicle (1) comprising:
a roof (3) configured to cover an upper portion of a cabin space of the vehicle;
an antenna device (10) that includes a casing (11a) disposed on an upper surface of the roof (3) and an antenna (11b) accommodated in the casing (11a) and configured to transmit and/or receive a radio wave;
a resin member (18) that is arranged adjacent to the antenna device (10); and
a metal member (22) that is attached to the resin member (18) and forms a metal layer,
wherein the antenna (11b) is configured to transmit and/or receive the radio wave that is directed to the upper surface of the roof (3) and an upper surface of the resin member (18),
wherein the metal member (22) is arranged to reflect the radio wave that is directed to the upper surface of the resin member (18),
wherein the resin member (18) includes an upper resin layer (19a) and a lower resin layer (19b), and
wherein the metal member (22) is interposed between the upper resin layer (19a) and the lower resin layer (19b).

2. The upper structure according to claim 1
wherein the antenna device (10) is configured to be disposed in an area on a vehicle rear side of the upper surface of the roof (3).

3. The upper structure according to any one of claims 1 to 2,
wherein the resin member (18) is configured to be disposed in an area on a vehicle rear side of the antenna device (10).

4. The upper structure according to any one of claims 1 to 3,
wherein the radio wave is a radio wave in a frequency band that is used in V2X communication.

5. The upper structure according to any one of claims 1 to 4 further comprising,
when the antenna device (10) is defined as a first antenna device,
a second antenna device (25) that includes an antenna (25a) configured to be provided in a partial area of a rear window (16) that is disposed behind the roof (3), the partial area of the rear window (16) being located below the resin member (18),
wherein the metal member (22) is attached to a position of the resin member (18) that does not overlap the antenna (25a) of the second antenna device (25) in vehicle plan view.

6. The upper structure according to any one of claims 1 to 5,
wherein the resin member (18) is a rear window spoiler.

7. A vehicle (1) comprising the upper structure according to any one of the preceding claims.

## Patentansprüche

1. Obere Struktur für ein Fahrzeug (1), umfassend:
ein Dach (3), das konfiguriert ist, einen oberen Abschnitt eines Kabinen- bzw. Fahrgastraums des Fahrzeugs abzudecken;
eine Antennenvorrichtung (10), die ein Gehäuse (11a), das an einer oberen Fläche bzw. Oberfläche des Daches (3) angeordnet ist, und eine Antenne (11b) beinhaltet, die in dem Gehäuse (11a) untergebracht und konfiguriert ist, eine Funkwelle zu senden und/oder zu empfangen;
ein Harzglied (18), das angrenzend bzw. benachbart zu der Antennenvorrichtung (10) angeordnet ist; und
ein Metallglied (22), das an dem Harzglied (18) angebracht ist und eine Metallschicht bildet,
wobei die Antenne (11b) konfiguriert ist, die auf die obere Fläche des Daches (3) und eine obere Fläche bzw. Oberfläche des Harzgliedes (18) gerichtete Funkwelle zu senden und/oder zu empfangen,
wobei das Metallglied (22) dahingehend angeordnet ist, die auf die obere Fläche des Harzgliedes (18) gerichtete Funkwelle zu reflektieren,
wobei das Harzglied (18) eine obere Harzschicht (19a) und eine untere Harzschicht (19b) beinhaltet, und
wobei das Metallglied (22) zwischen der oberen Harzschicht (19a) und der unteren Harzschicht (19b) angeordnet ist.

2. Obere Struktur nach einem der Ansprüche 1,
wobei die Antennenvorrichtung (10) konfiguriert ist, in einem Bereich auf einer Fahrzeugrückseite der oberen Fläche des Daches (3) angeordnet zu sein.

3. Obere Struktur nach einem der Ansprüche 1 bis 2,
wobei das Harzglied (18) konfiguriert ist, in einem Bereich auf einer Fahrzeugrückseite der Antennenvorrichtung (10) angeordnet zu sein.

4. Obere Struktur nach einem der Ansprüche 1 bis 3,
wobei die Funkwelle eine Funkwelle in einem Frequenzband ist, das in V2X-Kommunikation verwendet wird.

5. Obere Struktur nach einem der Ansprüche 1 bis 4, ferner umfassend,
wenn die Antennenvorrichtung (10) als eine erste Antennenvorrichtung definiert ist,
eine zweite Antennenvorrichtung (25), die eine Antenne (25a) beinhaltet, die konfiguriert ist, in einem Teilbereich einer hinter dem Dach (3) angeordneten Heckscheibe (16) bereitgestellt zu sein, wobei sich der Teilbereich der Heckscheibe (16) unterhalb des Harzgliedes (18) befindet,
wobei das Metallglied (22) an einer Position des Harzgliedes (18) angebracht ist, welche die Antenne (25a) der zweiten Antennenvorrichtung (25) in einer Fahrzeugdraufsicht nicht überlappt.

6. Obere Struktur nach einem der Ansprüche 1 bis 5,
wobei das Harzglied (18) ein Heckscheibenspoiler ist.

7. Fahrzeug (1) umfassend die obere Struktur nach einem der vorhergehenden Ansprüche.

## Revendications

1. Structure supérieure pour un véhicule (1) comprenant :
un toit (3) configuré pour couvrir une portion supérieure d'un espace d'habitacle du véhicule ;
un dispositif d'antenne (10) qui inclut un boîtier (11a) disposé sur une surface supérieure du toit (3), et une antenne (11b) hébergée dans le boîtier (11a) et configurée pour transmettre et/ou recevoir une onde radio ;
un élément de résine (18) qui est agencé de manière adjacente au dispositif d'antenne (10) ; et
un élément métallique (22) qui est relié à l'élément de résine (18) et forme une couche métallique,
dans laquelle l'antenne (11b) est configurée pour transmettre et/ou recevoir l'onde radio qui est dirigée vers la structure supérieure du toit (3) et une surface supérieure de l'élément de résine (18),
dans laquelle l'élément métallique (22) est agencé pour réfléchir l'onde radio qui est dirigée vers la surface supérieure de l'élément de résine (18),
dans laquelle l'élément de résine (18) inclut une couche de résine supérieure (19a) et une couche de résine inférieure (19b), et
dans laquelle l'élément métallique (22) est interposé entre la couche de résine supérieure (19a) et la couche de résine inférieure (19b).

2. Structure supérieure selon la revendication 1, dans laquelle le dispositif d'antenne (10) est configuré pour être disposé dans une zone sur un côté arrière de véhicule de la surface supérieure du toit (3).

3. Structure supérieure selon l'une quelconque des revendications 1 à 2, dans laquelle l'élément de résine (18) est configuré pour être disposé dans une zone sur un côté arrière de véhicule du dispositif d'antenne (10).

4. Structure supérieure selon l'une quelconque des revendications 1 à 3, dans laquelle l'onde radio est une onde radio dans une bande de fréquences qui est utilisée en communication V2X.

5. Structure supérieure selon l'une quelconque des revendications 1 à 4, comprenant en outre,
lorsque le dispositif d'antenne (10) est défini en tant que premier dispositif d'antenne,
un second dispositif d'antenne (25) qui inclut une antenne (25a) configurée pour être prévu dans une zone partielle d'une lunette arrière (16) qui est disposée derrière le toit (3), la zone partielle de la lunette arrière (16) étant située en dessous de l'élément de résine (18),
dans laquelle l'élément métallique (22) est relié à une position de l'élément de résine (18) qui ne chevauche pas l'antenne (25a) du second dispositif d'antenne (25) dans une vue en plan de véhicule.

6. Structure supérieure selon l'une quelconque des revendications 1 à 5, dans laquelle l'élément de résine (18) est un becquet de lunette arrière.

7. Véhicule (1) comprenant la structure supérieure selon l'une quelconque des revendications précédentes.
